# EUROPEAN PATENT SPECIFICATION

(11) **EP 4 297 467 B1**
(45) Date of publication and mention of the grant of the patent: **03.09.2025**
(21) Application number: 22774194.9
(22) Date of filing: 21.03.2022
(51) Int. Cl.: H04W 36/00, H04W 36/36

(54) **CONFIGURATION OPTIMIZATION METHODS AND DEVICES**
KONFIGURATIONOPTIMIERUNGSVERFAHREN UND -VORRICHTUNGEN
PROCÉDÉS ET DISPOSITIFS D'OPTIMISATION DE CONFIGURATION

(30) Priority: 22.03.2021 CN 202110301986
(43) Date of publication of application: 27.12.2023
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100053 (CN)
(74) Representative: Novagraaf Technologies
(86) International application number: PCT/CN2022/082056
(87) International publication number: WO 2022/199535

(56) References cited:
- EP-A1- 3 955 628
- WO-A1-2020/216148
- WO-A1-2022/082505
- CN-A- 111 083 751
- CN-A- 111 565 426
- CN-A- 111 836 317
- CN-A- 111 866 937
- US-A1- 2021 029 600
- CMCC: "The Reporting of CHO failure", vol. RAN WG2, no. Reno, Nevada, USA; 20191118 - 20191122, 17 November 2019 (2019-11-17), XP051826007, Retrieved from the Internet <URL:https://ftp.3gpp.org/Meetings_3GPP_SYNC/RAN2/Docs/R2-1916276.zip R2-1916276 The Reporting of CHO failure.doc> [retrieved on 20191117]
- NOKIA ET AL: "On RLF reporting for CHO and DAPS", vol. RAN WG2, no. Reno, USA; 20191118 - 20191122, 7 November 2019 (2019-11-07), XP051815938, Retrieved from the Internet <URL:https://ftp.3gpp.org/tsg_ran/WG2_RL2/TSGR2_108/Docs/R2-1915497.zip R2-1915497 On RLF reporting for CHO and DAPS.docx> [retrieved on 20191107]

## Description

### TECHNICAL FIELD

The disclosure relates to the technical field of communications, and in particular to a method and apparatus for optimizing configuration, a device, and a readable storage medium.

### BACKGROUND

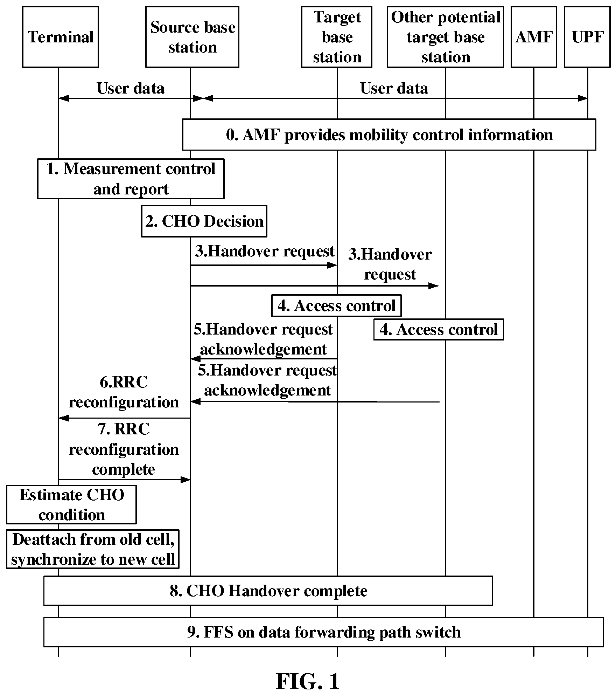

Conditional Handover (CHO) is a mechanism to enhance robustness of Handover (HO) or Secondary Node (SN) addition. In order to solve a problem that a channel between a terminal (such as a User Equipment (UE)) and a serving cell suddenly becomes poor (especially at a high frequency), causing that the UE cannot normally complete an HO or SN addition process, a base station (BS) may configure the UE to trigger measurement reporting at a low threshold, and a high threshold for triggering HO is carried in a HO command or a SN addition command, where random access (RA) resources used by the UE in a target cell may also be carried. Once the HO threshold is met, the UE initiates a RA procedure to a target BS or cell. A source BS or cell may configure the UE with CHOs for multiple target cells, referring to FIG. 1

Relevant background is known from CN 111565426A (which relates to optimization of handover parameters under CHO and provides a technical scheme that the terminal device receives CHO configuration information and transmits MRO related information to optimize the CHO parameters), WO 2020/216148A1 (which discloses a method for information reporting in CHO, wherein the terminal records the relevant information of CHO, and reports the relevant information of CHO to the network side; in this way, the network device can use the relevant information to adjust the CHO parameters, so as to make the configured CHO parameters more reasonable), 3GPP DRAFT R2-1916276 and 3GPP DRAFT R2-1915497.

WO 2022/082505 A1, which is prior art falling under Article 54(3) EPC, relates to reporting relevant information in CHO and specifically lists some items of CHO related information as follows: The UE sends the Conditional HO related information to the network, where the Conditional HO related information includes at least one of: a list of candidate cells, a measurement result of candidate cells at the first Conditional HO execution, a measurement result of candidate cells at the second Conditional HO execution, a list of candidate cells fulfilling the Conditional HO execution condition at the first Conditional HO execution, a measurement result of candidate cells fulfilling the Conditional HO execution condition at the first Conditional HO execution, a list of candidate cells fulfilling the Conditional HO execution condition at the second Conditional HO execution, a measurement result of candidate cells fulfilling the Conditional HO execution condition at the second Conditional HO execution, a Conditional HO execution condition, a first Conditional HO target cell, a measurement result of the first Conditional HO target cell, a second Conditional HO target cell, a measurement result of the second Conditional HO target cell, a rule of selecting the first Conditional HO target cell among candidate cells fulfilling the Conditional HO execution condition, or an indication of whether the measurement result of the second Conditional HO target cell fulfills the Conditional HO execution condition. In some implementations, the second Conditional HO execution refers to the Conditional HO execution when the T311 timer is running, e.g., when reestablishment is performed, and the reestablishment target cell is a Conditional HO candidate cell.

When a Radio Link Failure (RLF) occurs to the UE in the serving cell, the UE performs cell selection (the UE selects a cell which meets a camp threshold, to camp in the cell), and if the selected cell is a CHO candidate cell configured by the network side and the network side configures the UE to attempt CHO after the RLF, the UE may attempt CHO once again; otherwise, the UE performs a reestablishment process.

Similarly, Conditional Pscell Addition or Change (CPAC) is that a network-side Master Node (MN) or SN sends a Primary Secondary Cell (Pscell) addition or change condition to the UE in advance, and when the UE determines that a target Pscell meets the condition through measurement, the UE performs a Pscell Addition or Change process initiatively. When the CPAC fails, the network side may also configure the UE to attempt other CPAC candidate cells.

After the source BS configures the UE with the CHO or CPAC, multiple situations may occur to the UE, and the UE may attempt to access the target cell using resources of the CHO. After the UE is successfully connected to the target cell, the network side cannot clarify which situation is experienced by the UE before accessing the network, so that HO configuration and/or RA configuration cannot be optimized.

### SUMMARY

Embodiments of the disclosure provide a method for configuration, a method for information reporting, a network-side device, and medium terminal device. The invention is set out in the appended set of claims.

In the embodiments of the disclosure, the network-side device may configure the terminal to report related information of CHO or CPAC, thus the terminal may report the related information of the CHO or CPAC, so that the network-side device may perform at least CHO configuration optimization or RA configuration optimization.

### BRIEF DESCRIPTION OF THE DRAWINGS

Various other advantages and benefits will become apparent to those of ordinary skill in the art by reading detailed descriptions of some implementations below. The drawings are only intended to show some implementations, and are not considered to limit the disclosure. Furthermore, the same reference symbol is used to represent the same component throughout the drawings. In the drawings:
FIG. 1 is a schematic flowchart of CHO;
FIG. 2 is a schematic diagram of a wireless communication system to which an embodiment of the disclosure is applicable;
FIG. 3 is a first flowchart of a method for optimizing configuration according to an embodiment of the disclosure;
FIG. 4 is a second flowchart of a method for optimizing configuration according to an embodiment of the disclosure;
FIG. 5 is a third flowchart of a method for optimizing configuration according to an embodiment of the disclosure;
FIG. 6 is a first schematic diagram of an apparatus for optimizing configuration according to an embodiment of the disclosure not covered by the present invention;
FIG. 7 is a second schematic diagram of an apparatus for optimizing configuration according to an embodiment of the disclosure not covered by the present invention;
FIG. 8 is a schematic diagram of a network-side device according to an embodiment of the disclosure;
FIG. 9 is a schematic diagram of a terminal according to an embodiment of the disclosure.

### DETAILED DESCRIPTION

A term "include" and any variations thereof in the description and claims of the disclosure are intended to cover non-exclusive inclusion, for example, processes, methods, systems, products or devices including a series of operations or units are not necessarily limited to those clearly listed operations or units, instead, may include other operations or units which are not clearly listed or inherent to these processes, methods, products or devices. Furthermore, "and/or" is used in the description and claims to indicate at least one of the connected objects, for example, A and/or B indicate that there are three cases including a single A, a single B, and both A and B.

In the embodiments of the disclosure, words such as "exemplary", "for example" or the like are intended to be used as an example, an illustration or a description. Any embodiment or design solution described as "exemplary" or "for example" in the embodiments of the disclosure should not be construed as being more preferable or more advantageous than other embodiments or design solutions. Specifically, usage of words such as "exemplary", "for example" or the like is intended to present related concepts in a particular manner.

It should be noted that technologies described in the embodiments of the disclosure are not limited to a Long Term Evolution (LTE)/LTE-Advanced (LTE-A) system, and may also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA) and other systems. Terms "system" and "network" in the embodiments of the disclosure are often used interchangeably, and the described technologies may be used in the above-mentioned systems and radio technologies, as well as other systems and radio technologies. However, the following descriptions describe a New Radio (NR) system for the purpose of examples, and term "NR" is used in most of the following descriptions, although these technologies may also be applied to applications other than NR system applications, such as 6th Generation (6G) communication systems.

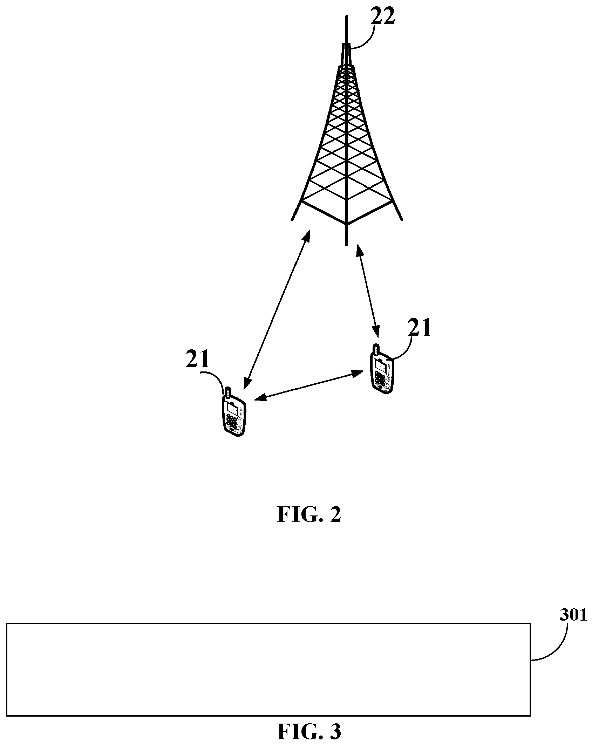

With reference to FIG. 2, a block diagram of a wireless communication system to which an embodiment of the disclosure is applicable, is shown. The wireless communication system includes a terminal 21 and a network-side device 22. The terminal 21 may also be referred to as a terminal device or a User Equipment (UE), and the terminal 21 may be a terminal-side device such as a mobile phone, a tablet personal computer, a laptop computer or a notebook computer, a personal digital assistant (PDA), a palm computer, a netbook, an ultra-mobile personal computer (UMPC), a Mobile Internet Device (MID), a wearable device or a Vehicle User Equipment (VUE), a Pedestrian User Equipment (PUE) or the like, and the wearable device includes a bracelet, an earphone, a glass, or the like. It should be noted that specific type of the terminal 21 is not limited in the embodiments of the disclosure. The network-side device 22 may be a base station or a core network, the base station may be referred to as a Node B (NB), an evolved Node B (eNB), an access point, a Base Transceiver Station (BTS), a radio base station, a radio transceiver, a Basic Service Set (BSS), an Extended Service Set (ESS), an NB, an eNB, a home NB, a home eNB, a Wireless Local Area Network (WLAN) access point, a Wireless Fidelity (WiFi) node, a Transmitting Receiving Point (TRP), or another suitable term in the field. As long as the same technical effect is achieved, the base station is not limited to a specific technical vocabulary, and it should be noted that the base station in the NR system is only used as an example in the embodiments of the disclosure, while specific type of the base station is not limited.

With reference to FIG. 3, an embodiment of the disclosure provides a method for optimizing configuration. The method is performed by a network-side device, such as a network management function, a Trace Collection Entity (TCE) or a base station. Specific operations of the method include operation 301.

At operation 301, a terminal is configured to report related information of Conditional Handover (CHO) or Conditional Pscell Addition or Change (CPAC), and the related information of the CHO or CPAC is configured to optimize Handover (HO) configuration and/or random access (RA) configuration.

In an implementation of the disclosure, the method shown in FIG. 3 may further include the operations of receiving the related information of the CHO or CPAC reported by the terminal, and performing CHO configuration optimization and/or RA configuration optimization according to the related information of the CHO or CPAC.

In an implementation of the disclosure, the related information of the CHO or CPAC includes one or more of the following items (1) to (13).
(1) Before or when performing the CHO or CPAC or when the CHO or CPAC is successful: Radio Link Management (RLM) of the terminal finds that there is an out-of-sync risk in a physical layer of a serving cell, or there is a failure risk in a radio link, or a first timer has been enabled.
   For example, the first timer may be a T310 timer.
(2) When RLF occurs to the terminal, the configured CHO or CPAC is not triggered, or only one event is triggered, or one or multiple triggered events, or whether at least one event is triggered (for example, the CHO or CPAC may be configured with an A5 event and an A3 event, and only the A5 event or the A3 event is triggered; or the CHO or CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CHO or CPAC. That is, the above descriptions are event triggering situation for the configured CHO or CPAC.
(3) Cell selection is performed after RLF or CHO failure occurs to the terminal, and a CHO candidate cell is selected. For example, performing cell selection after the RLF or CHO failure occurs to the terminal and selecting the CHO candidate cell, are indicated by 1 bit; or the UE reports an identifier (ID) of a candidate cell selected by performing cell selection.
(4) When the RLF occurs to the terminal in a Master Cell Group (MCG), configured CPAC is not triggered, or only one event is triggered, or one or multiple triggered events, or at least one event is triggered (for example, the CPAC may be configured with an A5 event and an A3 event, and only the A5 event or the A3 event is triggered; or the CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CPAC. That is, the above descriptions are event triggering situations for the configured CPAC when the RLF occurs to the terminal in the MCG.
(5) A Radio Resource Management (RRM) measurement value of a serving cell and/or a neighboring cell measured by the terminal when the first timer is enabled.
   The RRM measurement value may be at a beam level, or may be at a cell level.
(6) A time difference between enabling the first timer and receiving CHO or CPAC configuration.
(7) At least a running situation of the first timer (for example, how long the timing is, i.e., a timing duration) or a number of Radio Link Control (RLC) retransmissions when performing the CHO or CPAC or when the CHO or CPAC is successful.
(8) At least one of ID of a CHO or CPAC candidate cell configured by the network side, an event associated with the CHO or CPAC candidate cell, or a threshold or offset associated with the event.

The event may include one or more of (1) an A3 event, (2) an A5 event, (3) an A4 event and (4) a B1 event; that is, ID of the CHO or CPAC candidate cell configured by the network side, is associated with the A3 event, or associated with the A5 event, or associated with the A4 event, or associated with the B1 event, or associated with the A3 and A5 events.

The threshold or offset may include one or more of offset of the A3 event (which may be represented as a3-offset), threshold 1 of the A5 event (which may be represented as a5-Threshold1), threshold 2 of the A5 event (which may be represented as a5-Threshold2), threshold of the A4 event (which may be represented as a4-Threshold), threshold of the B1 event (which may be represented as b1-Threshold), hysteresis amount, and trigger time (which may be represented as TimeToTrigger).

(9) RA information configured for the terminal by a cell where CHO or CPAC failure occurs.

For example, the RA information may indicate two-step non-contention RA or contention-based RA (which may be represented as two-step CFRA/CBRA), four-step non-contention RA or contention-based RA (which may be represented as four-step CFRA/CBRA); further, in case of two-step RA, the RA information may further indicate whether it may fall back (which may be represented as fallback) to the four-step RA, or a maximum attempt number for the two-step RA before falling back to four-step RA.

(10) A time difference between configuring the CHO or CPAC and successfully completing RA (the UE sends a Radio Resource Control (RRC) Setup Request message in a target cell) or RRC connection (a RRC Setup Complete message or a RRC Reconfiguration Complete message sent by the UE in the target cell) by the terminal in the target cell.

(11) Time information corresponding to the related information of the CHO or CPAC.

(12) Position information of the terminal corresponding to the related information of the CHO or CPAC.

(13) A measurement result of a wireless network corresponding to the related information of the CHO or CPAC.

For example, the measurement result of the wireless network includes a measurement result of WLAN and/or a measurement result of Bluetooth.

During operation of the first timer, the first timer is stopped when the radio link is restored, otherwise, the first timer is always running.

In an implementation of the disclosure, CHO configuration optimization and/or RA configuration optimization is performed according to one or more of the related information of the CHO or CPAC, a RA report, a RLF report, and position of the terminal.

Exemplarily, a scenario of the first timer being T310 and CHO is taken an example below, and other scenarios (such as CPAC scenario) are similar and are not elaborated here.
1) When none of the configured CHO is triggered, the UE detects that a potential physical layer is out of sync, or T310 is enabled, or RLF occurs, which indicate that CHO triggering condition for the candidate cell is too strict, then the threshold for triggering CHO should be reduced, for example, a3-offset and/or a5-Threshold2 is reduced, the hysteresis amount and TimeToTrigger are reduced, a5-Threshold1 is increased, etc.. Further, when only one event is triggered, for example, A3 and A5 events are configured, while only the A3 event is triggered, which means that triggering condition for the A5 event is too strict, then a5-Threshold2 should be reduced, and/or the hysteresis amount and/or TimeToTrigger is reduced, and/or a5-Threshold1 is increased, etc.
   Further, according to the time difference between enabling T310 and receiving CHO configuration, and/or a timing length of T310, or the time difference between triggering or performing the CHO and enabling T310, the network side will know and adjust amplitudes of the above parameters more accurately, for example, the longer the timing length of T310, or the greater the number of RLC retransmissions, it means the greater the risk of RLF occurs to the UE in a source cell, and the earlier a source base station should configure the CHO, or the greater the trigger or performing threshold of the CHO is reduced.
2) When the UE performs cell selection and selects a candidate CHO cell, it means that the trigger threshold corresponding to the CHO cell should be reduced, so that the UE switches to the cell through the CHO.
3) When the UE performs cell selection but does not select any candidate CHO cell, a cell selected by the UE may be subsequently considered as a candidate cell.
4) When a first CHO failure occurs to the UE, it may perform analysis in conjunction with RA information configured by the cell on whether the reason of the RA failure is that the UE is not allowed to fall back to four-step RA from two-step RA, while sendings of the two-step RA are always unsuccessful.
5) According to the time difference between configuring the CHO and successfully completing RA (the UE sends a RRC Setup Request message in the target cell) or successfully completing RRC connection (a RRC Setup Complete message or a RRC Reconfiguration Complete message sent by the UE in the target cell) by the UE in the target cell, as well as RA configuration information of the cell, it may be determined whether the reason for taking too long time for the UE to access the target cell is that the attempt number for the two-step RA is too large.

In an implementation of the disclosure, the operation of receiving the related information of the CHO or CPAC reported by the terminal includes the following operations.

An RRC reestablishment request message or an RLF report sent by the terminal in a connected state or in a process of changing to the connected state is received, the RRC reestablishment request message or the RLF report includes the related information of the CHO or CPAC.

Or,
a message A sent by the terminal in a process of performing two-step RA to the target cell is received, the message A includes the related information of the CHO or CPAC.

In an implementation of the disclosure, the operation of receiving the related information of the CHO or CPAC reported by the terminal includes one of the following operations (1) to (3).
(1) A first request is sent to the terminal, and the related information of the CHO or CPAC reported by the terminal according to the first request is received.
(2) The related information of the CHO or CPAC initiatively reported by the terminal is received.
(3) A notification message sent by the terminal is received, the notification message indicates that the terminal has the related information of the CHO or CPAC; a second request is sent to the terminal according to the notification message; and the related information of the CHO or CPAC reported by the terminal according to the second request is received.

In the embodiment of the disclosure, the network-side device configures the terminal to report related information of CHO or CPAC, so that the network-side device may perform at least CHO configuration optimization or RA configuration optimization based on the related information of the CHO or CPAC reported by the terminal.

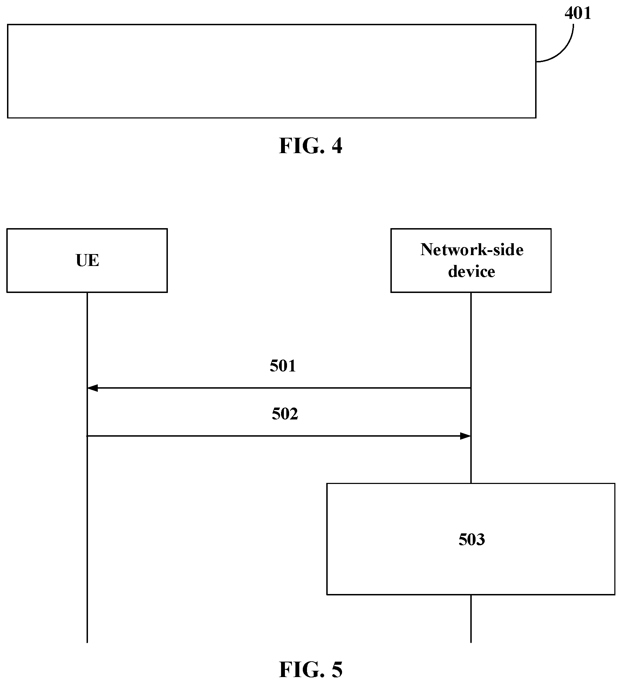

With reference to FIG. 4, an embodiment of the disclosure provides a method for optimizing configuration. An executive body of the method may be a terminal. Specific operations of the method include operation 401.

At operation 401, related information of CHO or CPAC is reported to a network-side device, and the related information of the CHO or CPAC is configured to optimize at least HO configuration or RA configuration.

In an implementation of the disclosure, the method shown in FIG. 4 may further include the following operations.

Configuration information of the network-side device is acquired, the configuration information is configured to configure the terminal to report the related information of the CHO or CPAC.

In an implementation of the disclosure, the network-side device includes one of:
a network management function, a TCE or a base station.

In the embodiment of the disclosure, the UE reports the related information of the CHO or CPAC in the RRC reestablishment request message or the RLF report in a connected state or in a process of changing to the connected state, or in the message A in a process of performing two-step RA to the target cell.

In an implementation of the disclosure, the operation of reporting the related information of the CHO or CPAC to the network-side device includes the following operations.

A RRC reestablishment request message or a RLF report is sent in a connected state or in a process of changing to the connected state, the RRC reestablishment request message or the RLF report includes the related information of the CHO or CPAC.

Or,
a message A is sent in a process of performing two-step RA to the target cell, the message A includes the related information of the CHO or CPAC.

In an implementation of the disclosure, the operation of reporting the related information of the CHO or CPAC to the network-side device includes one of the following operations (1) to (3).
(1) A first request sent by the network-side device is received, and the related information of the CHO or CPAC is reported to the network-side device according to the first request.
(2) The related information of the CHO or CPAC is initiatively reported to the network-side device.
(3) A notification message is sent, the notification message indicates that the terminal has the related information of the CHO or CPAC; a second request sent by the network-side device is received; and the related information of the CHO or CPAC is reported to the network-side device according to the second request.

In an implementation of the disclosure, the related information of the CHO or CPAC includes one or more of the following items (1) to (13).
(1) Before or when performing the CHO or CPAC or when the CHO or CPAC is successful: RLM of the terminal finds that there is an out-of-sync risk in a physical layer of a serving cell, or there is a failure risk in a radio link, or a first timer has been enabled.
   For example, the first timer may be a T310 timer.
(2) When RLF occurs to the terminal, none of the configured CHO or CPAC is triggered, or only one event is triggered, or one or multiple triggered events, or at least one event is triggered (for example, the CHO or CPAC may be configured with an A5 event and an A3 event, and only the A5 event or the A3 event is triggered; or the CHO or CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CHO or CPAC. That is, the above descriptions are event triggering situations for the configured CHO or CPAC.
(3) Cell selection is performed after RLF or CHO failure occurs to the terminal, and a CHO candidate cell is selected. For example, performing cell selection after the RLF or CHO failure occurs to the terminal and selecting the CHO candidate cell, are indicated by 1 bit; or the UE reports ID of a candidate cell selected by performing cell selection.
(4) When the RLF occurs to the terminal in a MCG, configured CPAC is not triggered, or only one event is triggered, or one or multiple triggered events, or at least one event is triggered (for example, the CPAC may be configured with an A5 event and an A3 event, and only the A5 event or the A3 event is triggered; or the CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CPAC. That is, the above descriptions are event triggering situations for the configured CPAC when the RLF occurs to the terminal in the MCG.
(5) A RRM measurement value of at least a serving cell or a neighboring cell measured by the terminal when the first timer is enabled.
   The RRM measurement value may be at a beam level, or may be at a cell level.
(6) A time difference between enabling the first timer and receiving CHO or CPAC configuration.
(7) At least a timing situation of the first timer (for example, how long the timing is, i.e., a timing duration) or a number of RLC retransmissions when performing the CHO or CPAC or when the CHO or CPAC is successful.
(8) At least one of ID of a CHO or CPAC candidate cell configured by the network side, an event associated with the CHO or CPAC candidate cell, or a threshold or offset associated with the event.

The event may include one or more of (1) an A3 event, (2) an A5 event, (3) an A4 event and (4) a B1 event; that is, ID of the CHO or CPAC candidate cell configured by the network side is associated with the A3 event, or associated with the A5 event, or associated with the A4 event, or associated with the B1 event, or associated with the A3 and A5 events.

The threshold or offset may include one or more of offset of the A3 event, threshold 1 of the A5 event, threshold 2 of the A5 event, threshold of the A4 event, threshold of the B1 event, hysteresis amount, and trigger time.

(9) RA information configured for the terminal by a cell where CHO or CPAC failure occurs.

For example, the RA information indicates two-step non-contention RA or contention-based RA, four-step non-contention RA or contention-based RA; further, in case of two-step RA, the RA information further indicates whether it may fall back to four-step RA, or a maximum attempt number for the two-step RA before falling back to four-step RA.

(10) A time difference between configuring the CHO or CPAC and successfully completing RA or RRC connection by the terminal in a target cell.

(11) Time information corresponding to the related information of the CHO or CPAC.

(12) Position information of the terminal corresponding to the related information of the CHO or CPAC.

(13) A measurement result of a wireless network corresponding to the related information of the CHO or CPAC.

For example, the measurement result of the wireless network includes a measurement result of WLAN and/or a measurement result of Bluetooth.

During operation of the first timer, the first timer is stopped when the radio link is restored, otherwise, the first timer is always running.

In the embodiment of the disclosure, the network-side device may configure the terminal to report related information of CHO or CPAC, thus the terminal may report the related information of the CHO or CPAC, so that the network-side device may perform at least CHO configuration optimization or RA configuration optimization. With reference to FIG. 5, specific operations of the process include the following operations 501 to 503.

At operation 501, the network-side device configures UE to report related information of CHO or CPAC.

At operation 502, the UE reports the related information of the CHO or CPAC to the network-side device.

At operation 503, the network-side device performs at least CHO configuration optimization or RA configuration optimization according to the related information of the CHO or CPAC.

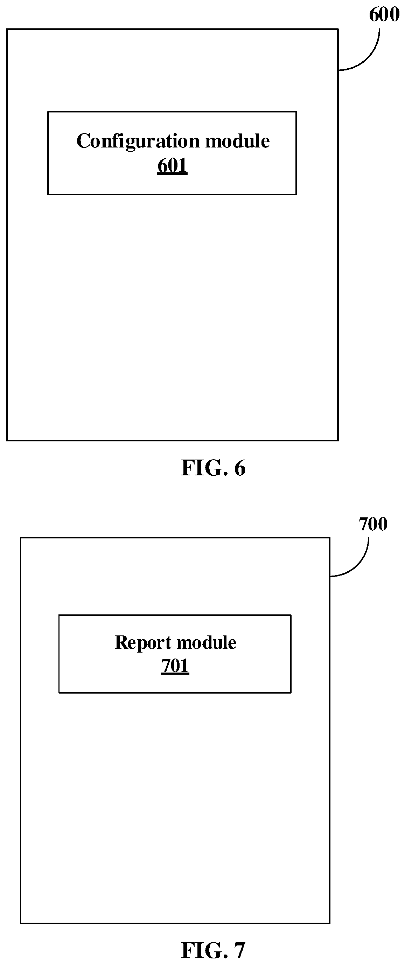

With reference to FIG. 6, an apparatus for optimizing configuration is provided, the apparatus is applied to a network-side device, such as a network management function, a TCE, or a base station. The apparatus 600 includes a configuration module 601.

The configuration module 601 is configured to configure a terminal to report related information of CHO or CPAC.

In an implementation of the disclosure, the related information of the CHO or CPAC includes one or more of the following items (1) to (13).
(1) Before or when performing the CHO or CPAC or when the CHO or CPAC is successful: RLM of the terminal finds that there is an out-of-sync risk in a physical layer of a serving cell, or there is a failure risk in a radio link, or a first timer has been enabled.
   For example, the first timer may be a T310 timer.
(2) When RLF occurs to the terminal, none of the configured CHO or CPAC is triggered, or only one event is triggered, or one or multiple triggered events, or at least one event is triggered (for example, the CHO or CPAC may be configured with an A5 event and an A3 event, and only the A5 event or the A3 event is triggered; or the CHO or CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CHO or CPAC. That is, the above descriptions are event triggering situation for the configured CHO or CPAC.
(3) Cell selection is performed after RLF or CHO failure occurs to the terminal, and a CHO candidate cell is selected. For example, performing cell selection after the RLF or CHO failure occurs to the terminal and selecting the CHO candidate cell, are indicated by 1 bit; or the UE reports ID of a candidate cell selected by performing cell selection.
(4) When the RLF occurs to the terminal in a MCG, configured CPAC is not triggered, or only one event is triggered, or one or multiple triggered events, or at least one event is triggered (for example, the CPAC may be configured with an A5 event and an A3 event, and only the A5 event or the A3 event is triggered; or the CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CPAC. That is, the above descriptions are event triggering situations for the configured CPAC when the RLF occurs to the terminal in the MCG.
(5) A RRM measurement value of at least a serving cell or a neighboring cell measured by the terminal when the first timer is enabled.
   The RRM measurement value may be at a beam level, or may be at a cell level.
(6) A time difference between enabling the first timer and receiving CHO or CPAC configuration.
(7) At least a running situation of the first timer (for example, how long the timing is, i.e., a timing duration) or a number of RLC retransmissions when performing the CHO or CPAC or when the CHO or CPAC is successful.
(8) At least one of ID of a CHO or CPAC candidate cell configured by the network side, an event associated with the CHO or CPAC candidate cell, or a threshold or offset associated with the event.

The event may include one or more of (1) an A3 event, (2) an A5 event, (3) an A4 event and (4) a B1 event; that is, ID of the CHO or CPAC candidate cell configured by the network side, is associated with the A3 event, or associated with the A5 event, or is associated with the A4 event, or is associated with the B1 event, or is associated with the A3 and A5 events.

The threshold or offset may include one or more of offset of the A3 event, threshold 1 of the A5 event, threshold 2 of the A5 event, threshold of the A4 event, threshold of the B1 event, hysteresis amount, and trigger time.

(9) RA information configured for the terminal by a cell where CHO or CPAC failure occurs.

For example, the RA information may indicate two-step non-contention RA or contention-based RA, four-step non-contention RA or contention-based RA; further, in case of two-step RA, the RA information may further indicate whether it may fall back to the four-step RA, or a maximum attempt number for the two-step RA before falling back to four-step RA.

(10) A time difference between configuring the CHO or CPAC and successfully completing RA (the UE sends a RRC Setup Request message in a target cell) or RRC connection (a RRC Setup Complete message or a RRC Reconfiguration Complete message sent by the UE in the target cell) by the terminal in the target cell.

(11) Time information corresponding to the related information of the CHO or CPAC.

(12) Position information of the terminal corresponding to the related information of the CHO or CPAC.

(13) A measurement result of a wireless network corresponding to the related information of the CHO or CPAC.

For example, the measurement result of the wireless network includes a measurement result of WLAN and/or a measurement result of Bluetooth.

During operation of the first timer, the first timer is stopped when the radio link is restored, otherwise, the first timer is always running.

In an implementation of the disclosure, the apparatus further includes a receiving module and an optimization module.

The receiving module is configured to receive the related information of the CHO or CPAC reported by the terminal.

The optimization module is configured to perform at least CHO configuration optimization or RA configuration optimization according to the related information of the CHO or CPAC.

In an implementation of the disclosure, the optimization module is configured to perform at least CHO configuration optimization or RA configuration optimization according to one or more of the related information of the CHO or CPAC, a RA report, a RLF report, and position of the terminal.

In an implementation of the disclosure, the receiving module is configured to:
receive a RRC reestablishment request message or a RLF report sent by the terminal in a connected state or in a process of changing to the connected state, the RRC reestablishment request message or the RLF report includes the related information of the CHO or CPAC;
   or,
receive a message A sent by the terminal in a process of performing two-step RA to the target cell, the message A includes the related information of the CHO or CPAC.

In an implementation of the disclosure, the receiving module is configured to perform one of the following operations (1) to (3).
(1) A first request is sent to the terminal, and the related information of the CHO or CPAC reported by the terminal according to the first request is received.
(2) The related information of the CHO or CPAC initiatively reported by the terminal is received.
(3) A notification message sent by the terminal is received, the notification message indicates that the terminal has the related information of the CHO or CPAC; a second request is sent to the terminal according to the notification message; and the related information of the CHO or CPAC reported by the terminal according to the second request is received.

The apparatus provided in the embodiment of the disclosure may implement each process implemented by the method embodiment shown in FIG. 3, and achieve the same technical effect, which are not elaborated here to avoid repetition.

In an actual application, the configuration module 601 may be implemented by a processor in an apparatus for optimizing configuration in combination with a transceiver; the receiving module may be implemented by a transceiver in an apparatus for optimizing configuration; and the optimization module may be implemented by a processor in an apparatus for optimizing configuration.

With reference to FIG. 7, an apparatus for optimizing configuration is provided, the apparatus is applied to a terminal. The apparatus 700 includes a reporting module 701.

The reporting module 701 is configured to report related information of CHO or CPAC to a network-side device.

In an implementation of the disclosure, the apparatus 700 further includes an acquisition module.

The acquisition module is configured to acquire configuration information of the network-side device, the configuration information is configured to configure the terminal to report the related information of the CHO or CPAC.

In an implementation of the disclosure, the network-side device includes one of a network management function, a TCE, or a base station.

In an implementation of the disclosure, the reporting module 701 performs operations of:
sending a RRC reestablishment request message or a RLF report in a connected state or in a process of changing to the connected state, the RRC reestablishment request message or the RLF report includes the related information of the CHO or CPAC;
   or,
sending a message A in a process of performing two-step random access in the target cell, the message A includes the related information of the CHO or CPAC.

In an implementation of the disclosure, the reporting module 701 performs one of:
(1) receiving a first request sent by the network-side device; reporting the related information of the CHO or CPAC to the network-side device according to the first request;
(2) initiatively reporting the related information of the CHO or CPAC to the network-side device; or
(3) sending a notification message, the notification message indicating that the terminal has the related information of the CHO or CPAC; receiving a second request sent by the network-side device; and reporting the related information of the CHO or CPAC to the network-side device according to the second request.

In an implementation of the disclosure, the related information of the CHO or CPAC includes one or more of the following items (1) to (13).
(1) Before or when performing the CHO or CPAC or when the CHO or CPAC is successful: RLM of the terminal finds that there is an out-of-sync risk in a physical layer of a serving cell, or there is a failure risk in a radio link, or a first timer has been enabled.
   For example, the first timer may be a T310 timer.
(2) When RLF occurs to the terminal, none of the configured CHO or CPAC is triggered, or only one event is triggered, or one or multiple triggered events, or at least one event is triggered (for example, the CHO or CPAC may be configured with an A5 event and an A3 event, and only the A5 event or the A3 event is triggered; or the CHO or CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CHO or CPAC. That is, the above descriptions are event triggering situation for the configured CHO or CPAC.
(3) Cell selection is performed after RLF or CHO failure occurs to the terminal, and a CHO candidate cell is selected. For example, performing cell selection after the RLF or CHO failure occurs to the terminal and selecting the CHO candidate cell, are indicated by 1 bit; or the UE reports ID of a candidate cell selected by performing cell selection.
(4) When the RLF occurs to the terminal in a MCG, configured CPAC is not triggered, or only one event is triggered, or one or multiple triggered events, or at least one event is triggered (for example, the CPAC may be configured with an A5 event and an A3 event, and only the A5 event or the A3 event is triggered; or the CPAC may be configured with an A4 event and a B1 event, and only the A4 event or the A3 event is triggered; or the triggered event is A3 or A5 or A4 or B1; or the A3 event is triggered, and/or the A5 event is triggered; or whether A3 is triggered, and/or whether B1 is triggered, etc.), the A3 event, the A5 event, the A4 event and the B1 event may also be represented by a first event or a second event of the CPAC. That is, the above descriptions are event triggering situations for the configured CPAC when the RLF occurs to the terminal in the MCG.
(5) A RRM measurement value of at least a serving cell or a neighboring cell measured by the terminal when the first timer is enabled.
   The RRM measurement value may be at a beam level, or may be at a cell level.
(6) A time difference between enabling the first timer and receiving CHO or CPAC configuration.
(7) At least a running situation of the first timer (for example, how long the timing is, i.e., a timing duration) or a number of RLC retransmissions when performing the CHO or CPAC or when the CHO or CPAC is successful.
(8) At least one of ID of a CHO or CPAC candidate cell configured by the network side, an event associated with the CHO or CPAC candidate cell, or a threshold or offset associated with the event.

The event may include one or more of (1) an A3 event, (2) an A5 event, (3) an A4 event and (4) a B1 event; that is, ID of the CHO or CPAC candidate cell configured by the network side, is associated with the A3 event, or associated with the A5 event, or associated with the A4 event, or associated with the B1 event, or associated with the A3 and A5 events.

The threshold or offset may include one or more of offset of the A3 event, threshold 1 of the A5 event, threshold 2 of the A5 event, threshold of the A4 event, threshold of the B1 event, hysteresis amount, and trigger time.

(9) RA information configured for the terminal by a cell where CHO or CPAC failure occurs.

For example, the RA information may indicate two-step non-contention RA or contention-based RA, four-step non-contention RA or contention-based RA; further, in case of two-step RA, the RA information may further indicate whether it may fall back to the four-step RA, or a maximum attempt number for the two-step RA before falling back to the four-step RA.

(10) A time difference between configuring the CHO or CPAC and successfully completing RA (the UE sends a RRC Setup Request message in a target cell) or RRC connection (a RRC Setup Complete message or a RRC Reconfiguration Complete message sent by the UE in the target cell) by the terminal in the target cell.

(11) Time information corresponding to the related information of the CHO or CPAC.

(12) Position information of the terminal corresponding to the related information of the CHO or CPAC.

(13) A measurement result of a wireless network corresponding to the related information of the CHO or CPAC.

For example, the measurement result of the wireless network includes a measurement result of WLAN and/or a measurement result of Bluetooth.

During operation of the first timer, the first timer is stopped when the radio link is restored, otherwise, the first timer is always running.

The apparatus provided in the embodiment of the disclosure may implement each process implemented by the method embodiment shown in FIG. 4, and achieve the same technical effect, which are not elaborated here to avoid repetition.

In an actual application, the reporting module 701 may be implemented by an interface unit in an apparatus for optimizing configuration; the acquisition module may be implemented by a processor in an apparatus for optimizing configuration in combination with an interface unit.

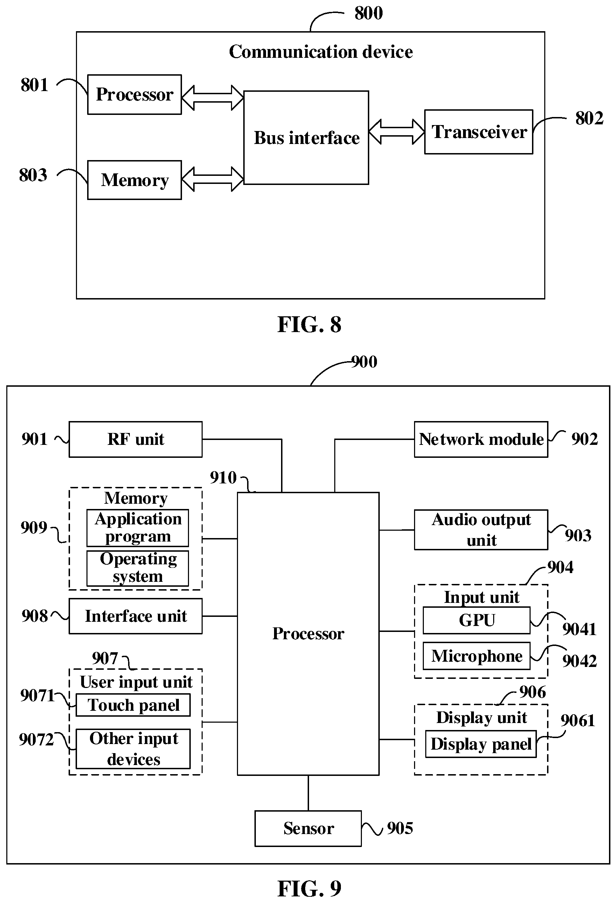

With reference to FIG. 8, it is a structural diagram of a network-side device to which an embodiment of the disclosure is applied. As shown in FIG. 8, the network-side device 800 includes a processor 801, a transceiver 802, a memory 803, and a bus interface.

In an embodiment of the disclosure, the network-side device 800 further includes a program stored on the memory 803 and executable on the processor 801. The program implements operations of the embodiment shown in FIG. 3 when the program is executed by the processor 801.

In FIG. 8, a bus architecture may include any number of interconnected buses and bridges, specifically, one or more processors represented by the processor 801 and various circuits of memories represented by the memory 803 are linked together. The bus architecture may also link various other circuits, such as a peripheral device, a voltage regulator, a power management circuit, or the like together, these circuits are well known in the art and thus are not further described here. The bus interface provides an interface. The transceiver 802 may be multiple elements, that is, may include a transmitter and a receiver, and provide a unit to communicate with various other devices on a transmission medium.

The processor 801 is responsible for managing the bus architecture and general processing, and the memory 803 may store data used by the processor 801 when it performs operations.

The network-side device provided in the embodiment of the disclosure may implement each process implemented by the method embodiment shown in FIG. 3, and achieve the same technical effect, which are not elaborated here to avoid repetition.

FIG. 9 is a schematic diagram of a hardware structure of a terminal implementing an embodiment of the disclosure. The terminal 900 includes, but is not limited to a radio frequency (RF) unit 901, a network module 902, an audio output unit 903, an input unit 904, a sensor 905, a display unit 906, a user input unit 907, an interface unit 908, a memory 909, a processor 910, or other components.

It may be understood by those skilled in the art that the terminal 900 may further include a power supply (such as a battery) to supply power to each component, and the power supply may be logically connected to the processor 910 by a power management system, thereby implementing functions such as charging and discharging management, power consumption management, or the like by the power management system. The terminal structure shown in FIG. 9 does not constitute limitation on the terminal, and the terminal may include more or fewer components than those shown in the figure, or may combine some components, or may have different component arrangement, which are not elaborated here.

It should be understood that in the embodiment of the disclosure, the input unit 904 may include a Graphics Processing Unit (GPU) 9041 and a microphone 9042, and the GPU 9041 processes image data in form of a static picture or a video obtained by an image capturing device (such as a camera) in a video capturing mode or an image capturing mode. The display unit 906 may include a display panel 9061, and the display panel 9061 may be configured in form of a liquid crystal display (LCD), an organic light emitting diode (OLED), etc. The user input unit 907 includes a touch panel 9071 and other input devices 9072. The touch panel 9071 is also referred to as a touch screen. The touch panel 9071 may include two parts, i.e., a touch detection device and a touch controller. Other input devices 9072 may include, but are not limited to a physical keyboard, a function key (such as a volume control button, an on/off button, etc.), a trackball, a mouse and an operation rod, which are not elaborated here.

In the embodiment of the disclosure, the RF unit 901 receives downlink (DL) data from the network-side device and provides the DL data to the processor 910 to process it; furthermore, the RF unit 901 sends uplink (UL) data to the network-side device. Generally, the RF unit 901 includes, but is not limited to an antenna, at least one amplifier, a transceiver, a coupler, a low noise amplifier, a duplexer, etc.

The memory 909 may be configured to store software programs or instructions and various data. The memory 909 may mainly include a program or instruction storage area and a data storage area, and the program or instruction storage area may store an operating system, application programs or instructions required by at least one function (such as a sound playing function, an image playing function, etc.). Furthermore, the memory 909 may include a high-speed Random Access Memory (RAM), and may further include a non-volatile memory. The non-volatile memory may be a Read-Only Memory (ROM), a Programmable ROM (PROM), an Erasable PROM (EPROM), an Electrically EPROM (EEPROM), or a flash memory. For example, the memory may be at least one disk storage device, a flash memory device, or other non-volatile solid-state storage devices.

The processor 910 may include one or more processing units; the processor 910 may integrate an application processor and a modulation and demodulation processor, the application processor mainly processes the operating system, user interfaces, application programs, or instructions, etc., and the modulation and demodulation processor mainly processes wireless communication, such as a baseband processor. It may be understood that the modulation and demodulation processor may also not be integrated into the processor 910.

The terminal provided in the embodiment of the disclosure may implement each process implemented by the method embodiment shown in FIG. 4, and achieve the same technical effect, which are not elaborated here to avoid repetition.

An embodiment of the disclosure further provides a readable storage medium, the readable storage medium has stored thereon a program or an instruction, and the program or the instruction implements each process of the method embodiment shown in each of FIG. 3 and FIG. 4 when the program or the instruction is executed by a processor, and achieves the same technical effect, which are not elaborated here to avoid repetition.

The processor is a processor in the terminal in the above embodiments. The readable storage medium includes a computer-readable storage medium, such as a computer ROM, a RAM, a magnetic disk, or an optical disc, etc.

Operations of methods or algorithms described in combination with contents of the disclosure may be implemented in a hardware manner, or may be implemented in a manner in which a processor executes software instructions. The software instructions may be composed of corresponding software modules which may be stored in a RAM, a flash memory, a ROM, an EPROM, an EEPROM, a register, a hard disk, a mobile hard disk, a read-only compact disk (CD), or any other forms of storage media well known in the art. An exemplary storage medium is coupled to the processor to enable the processor to read information from the storage medium and write information into the storage medium. Of course, the storage medium may also be a component of the processor. The processor and the storage medium may be carried in an Application Specific Integrated Circuit (ASIC). Furthermore, the ASIC may be carried in a core network interface device. Of course, the processor and the storage medium may also be present in the core network interface device as discrete components.

It should be appreciated by those skilled in the art that in the above one or more examples, functions described in the disclosure may be implemented by hardware, software, firmware, or any combination thereof. When functions are implemented using software, these functions may be stored in a computer-readable medium or transmitted as one or more instructions or codes on the computer-readable medium. The computer-readable medium includes a computer storage medium and a communication medium, and the communication medium includes any medium which facilitates transferring a computer program from one place to another place. The storage medium may be any available medium accessible by a general-purpose or special-purpose computer.

It should be understood by those skilled in the art that the embodiments of the disclosure may be provided as a method, a system, or a computer program product. Therefore, the embodiments of the disclosure may be in form of an entirely hardware embodiment, an entirely software embodiment, or an embodiment combining software with hardware. Furthermore, the embodiments of the disclosure may be in form of a computer program product implemented on one or more computer-available storage media (including, but not limited to a disk memory, a CD-ROM, an optical memory, etc.) including computer-available program codes.

The embodiments of the disclosure are described with reference to flowcharts and/or block diagrams of methods, devices (systems) and computer program products according to the embodiments of the disclosure. It should be understood that each flow and/or block in the flowchart and/or the block diagram, and a combination of flows and/or blocks in the flowchart and/or the block diagram, may be implemented by computer program instructions. These computer program instructions may be provided to a processor of a general-purpose computer, a special-purpose computer, an embedded processor, or other programmable data processing devices to generate a machine, such that instructions executed by the processor of the computer or other programmable data processing devices generate a device configured to implement functions specified in one or more flows of the flowchart and/or one or more blocks of the block diagram.

These computer program instructions may also be stored in a computer-readable memory which may direct a computer or other programmable data processing devices to operate in a specific manner, such that the instructions stored in the computer-readable memory produce a product which includes an instruction device implementing functions specified in one or more flows of the flowchart and/or one or more blocks of the block diagram.

These computer program instructions may also be loaded onto a computer or other programmable data processing devices, such that a series of operational steps are executed on the computer or other programmable devices to produce a computer-implemented process, such that the instructions executed on the computer or other programmable devices provide operations to implement functions specified in one or more flows of the flowchart and/or one or more blocks of the block diagram.

## Claims

1. A method for configuration, executed by a network-side device, comprising:
configuring (301) a terminal to report related information of Conditional Handover, CHO, or Conditional Pscell Addition or Change, CPAC,
**characterized in that**, the related information of the CHO or CPAC comprises one or more of:
an event triggering situation for configured CHO or CPAC, wherein a plurality of events are configured for the CHO or CPAC, and the event triggering situation for configured CHO or CPAC comprises one of:
the configured CHO or CPAC being not triggered;
only one event being triggered for the configured CHO or CPAC;
one or multiple triggered events for the configured CHO or CPAC; or
whether one or multiple events for the configured CHO or CPAC are triggered;
1 bit, or an identifier, ID, of a CHO candidate cell, wherein the 1 bit indicates that cell selection is performed after Radio Link Failure, RLF, or CHO failure occurs to the terminal and the CHO candidate cell is selected by performing the cell selection, and the ID of the CHO candidate cell is an ID of a CHO candidate cell that is selected by performing cell selection after RLF, or CHO failure occurs to the terminal;
an event triggering situation for the configured CPAC when the RLF occurs to the terminal in a Master Cell Group, MCG, wherein a plurality of events are configured for the CPAC, and the event triggering situation for the configured CPAC comprises one of:
the configured CPAC being not triggered;
only one event being triggered for the configured CPAC;
one or multiple triggered events for the configured CPAC; or
whether one or multiple events for the configured CPAC are triggered; and
at least a running situation of a first timer or a number of Radio Link Control, RLC, retransmissions when performing the CHO or CPAC or when the CHO or CPAC is successful.

2. The method of claim 1, further comprising:
receiving the related information of the CHO or CPAC reported by the terminal; and
performing at least CHO configuration optimization or RA configuration optimization according to the related information of the CHO or CPAC.

3. The method of claim 1, wherein receiving the related information of the CHO or CPAC reported by the terminal comprises:
receiving an RRC reestablishment request message or a RLF report sent by the terminal in a connected state or in a process of changing to the connected state, the RRC reestablishment request message or the RLF report comprising the related information of the CHO or CPAC;
or,
receiving a message A sent by the terminal in a process of performing two-step RA to the target cell, the message A comprising the related information of the CHO or CPAC.

4. The method of claim 1, wherein receiving the related information of the CHO or CPAC reported by the terminal comprises:
sending a first request to the terminal;
receiving the related information of the CHO or CPAC reported by the terminal according to the first request;
or,
receiving the related information of the CHO or CPAC initiatively reported by the terminal;
or,
receiving a notification message sent by the terminal, the notification message indicating that the terminal has the related information of the CHO or CPAC;
sending a second request to the terminal according to the notification message; and
receiving the related information of the CHO or CPAC reported by the terminal according to the second request.

5. A method for information reporting, executed by a terminal, comprising:
reporting (401) the related information of the CHO or CPAC to the network-side device,
**characterized in that**, the related information of the CHO or CPAC comprises one or more of:
an event triggering situation for configured CHO or CPAC, wherein a plurality of events are configured for the CHO or CAPC, and the event triggering situation for configured CHO or CPAC comprises one of:
the configured CHO or CPAC being not triggered;
only one event being triggered for the configured CHO or CPAC;
one or multiple triggered events for the configured CHO or CPAC; or
whether one or multiple events for the configured CHO or CPAC are triggered;
1 bit, or an identifier, ID, of a CHO candidate cell, wherein the 1 bit indicates that cell selection is performed after Radio Link Failure, RLF, or CHO failure occurs to the terminal and the CHO candidate cell is selected by performing the cell selection, and the ID of the CHO candidate cell is an ID of a CHO candidate cell that is selected by performing cell selection after RLF, or CHO failure occurs to the terminal;
an event triggering situation for the configured CPAC when the RLF occurs to the terminal in a Master Cell Group, MCG, wherein a plurality of events are configured for the CPAC, and the event triggering situation for the configured CPAC comprises one of:
the configured CPAC being not triggered;
only one event being triggered for the configured CPAC;
one or multiple triggered events for the configured CPAC; or
whether one or multiple events for the configured CPAC are triggered; and
at least a running situation of a first timer or a number of Radio Link Control, RLC, retransmissions when performing the CHO or CPAC or when the CHO or CPAC is successful.

6. The method of claim 5, wherein the network-side device comprises one of:
a network management function, a Trace Collection Entity, TCE, or a base station.

7. The method of claim 5, wherein reporting the related information of the CHO or CPAC to the network-side device comprises:
sending an RRC reestablishment request message or a RLF report in a connected state or in a process of changing to the connected state, the RRC reestablishment request message or the RLF report comprising the related information of the CHO or CPAC;
or,
sending a message A in a process of performing two-step RA to the target cell, the message A comprising the related information of the CHO or CPAC.

8. The method of claim 5, wherein reporting the related information of the CHO or CPAC to the network-side device comprises:
receiving a first request sent by the network-side device, and reporting the related information of the CHO or CPAC to the network-side device according to the first request;
or,
initiatively reporting the related information of the CHO or CPAC to the network-side device;
or,
sending a notification message, the notification message indicating that the terminal has the related information of the CHO or CPAC, receiving a second request sent by the network-side device; and reporting the related information of the CHO or CPAC to the network-side device according to the second request.

9. A network-side device (800), comprising:
a processor (801);
a memory (803); and
a program stored in the memory and executable by the processor (801),
the network-side device (800) being configured to perform the steps of the method of any one of claims 1 to 4 when the program is executed by the processor (801).

10. A terminal (900), comprising:
a processor (910);
a memory (909); and
a program stored on the memory (909) and executable by the processor (910),
the terminal (900) being configured to perform the steps of the method of any one of claims 5 to 8 when the program is executed by the processor (910).

## Patentansprüche

1. Verfahren zur Konfiguration, das von einer netzwerkseitigen Vorrichtung ausgeführt wird, umfassend:
Konfigurieren (301) eines Endgerätes, um zugehörige Informationen über bedingte Übergabe, CHO, oder bedingte Pscell-Erweiterung oder -änderung, CPAC, zu melden,
**dadurch gekennzeichnet, dass** die zugehörigen Informationen der CHO oder CPAC eines oder mehrere von Folgendem umfassen:
einer ereignisauslösenden Situation für die konfigurierte CHO oder CPAC, wobei eine Vielzahl von Ereignissen für die CHO oder CPAC konfiguriert ist und die ereignisauslösende Situation für die konfigurierte CHO oder CPAC eines von Folgendem umfasst:
dass die konfigurierte CHO oder CPAC nicht ausgelöst wird;
dass nur ein Ereignis für die konfigurierte CHO oder CPAC ausgelöst wird;
einem oder mehreren ausgelösten Ereignissen für die konfigurierte CHO oder CPAC; oder
ob ein oder mehrere Ereignisse für die konfigurierte CHO oder CPAC ausgelöst werden;
1 Bit oder eine Kennung, ID, einer CHO-Kandidatenzelle, wobei das 1 Bit anzeigt, dass die Zellenauswahl durchgeführt wird, nachdem ein Funkverbindungsausfall, RLF, oder ein CHO-Ausfall bei dem Endgerät aufgetreten ist und die CHO-Kandidatenzelle durch die Durchführung der Zellenauswahl ausgewählt wird, und die ID der CHO-Kandidatenzelle eine ID einer CHO-Kandidatenzelle ist, die durch die Durchführung der Zellenauswahl ausgewählt wird, nachdem der RLF- oder CHO-Ausfall bei dem Endgerät aufgetreten ist;
einer ereignisauslösender Situation für die konfigurierte CPAC, wenn der RLF für das Endgerät in einer Hauptzellengruppe, MCG, auftritt, wobei eine Vielzahl von Ereignissen für die CPAC konfiguriert sind und die ereignisauslösende Situation für die konfigurierte CPAC eines von Folgendem umfasst:
dass die konfigurierte CPAC nicht ausgelöst wird;
dass nur ein Ereignis für die konfigurierte CPAC ausgelöst wird;
einem oder mehreren ausgelösten Ereignissen für die konfigurierte CPAC; oder
ob ein oder mehrere Ereignisse für die konfigurierte CPAC ausgelöst werden; und
mindestens einer laufenden Situation eines ersten Zeitgebers oder einer Anzahl von Sendewiederholungen der Funkverbindungssteuerung, RLC, wenn die CHO oder CPAC durchgeführt wird oder wenn die CHO oder CPAC erfolgreich ist.

2. Verfahren nach Anspruch 1, ferner umfassend:
Empfangen der zugehörigen Informationen der CHO oder CPAC, die vom Endgerät gemeldet werden; und
Durchführen von mindestens CHO-Konfigurationsoptimierung oder RA-Konfigurationsoptimierung nach den zugehörigen Informationen der CHO oder CPAC.

3. Verfahren nach Anspruch 1, wobei das Empfangen der vom Endgerät gemeldeten zugehörigen Informationen der CHO oder CPAC Folgendes umfasst:
Empfangen einer RRC-Wiederherstellungsanforderungsnachricht oder eines RLF-Berichts, die von dem Endgerät in einem verbundenen Zustand oder in einem Prozess des Wechsels in den verbundenen Zustand gesendet werden, wobei die RRC-Wiederherstellungsanforderungsnachricht oder der RLF-Bericht die zugehörigen Informationen der CHO oder CPAC umfasst;
oder
Empfangen einer Nachricht A, die von dem Endgerät in einem Prozess der Durchführung einer zweistufigen RA an die Zielzelle gesendet wird, wobei die Nachricht A die zugehörigen Informationen der CHO oder CPAC umfasst.

4. Verfahren nach Anspruch 1, wobei das Empfangen der vom Endgerät gemeldeten zugehörigen Informationen der CHO oder CPAC Folgendes umfasst:
Senden einer ersten Anfrage an das Endgerät;
Empfangen der zugehörigen Informationen der CHO oder CPAC, die vom Endgerät nach der ersten Anfrage gemeldet werden;
oder
Empfangen der zugehörigen Informationen der CHO oder CPAC, die vom Endgerät einleitend gemeldet werden;
oder
Empfangen einer vom Endgerät gesendeten Benachrichtigungsnachricht, wobei die Benachrichtigungsnachricht anzeigt, dass das Endgerät die zugehörigen Informationen der CHO oder CPAC aufweist;
Senden einer zweiten Anfrage an das Endgerät nach der Benachrichtigungsnachricht; und
Empfangen der zugehörigen Informationen der CHO oder CPAC, die vom Endgerät nach der zweiten Anfrage gemeldet werden.

5. Verfahren zur Informationsmeldung, das von einem Endgerät ausgeführt wird, umfassend:
Melden (401) der zugehörigen Informationen der CHO oder CPAC an die netzwerkseitige Vorrichtung,
**dadurch gekennzeichnet, dass** die zugehörigen Informationen der CHO oder CPAC eines oder mehrere von Folgendem umfassen:
einer ereignisauslösenden Situation für die konfigurierte CHO oder CPAC, wobei eine Vielzahl von Ereignissen für die CHO oder CAPC konfiguriert ist und die ereignisauslösende Situation für die konfigurierte CHO oder CPAC eines von Folgendem umfasst:
dass die konfigurierte CHO oder CPAC nicht ausgelöst wird;
dass nur ein Ereignis für die konfigurierte CHO oder CPAC ausgelöst wird;
einem oder mehreren ausgelösten Ereignissen für die konfigurierte CHO oder CPAC; oder
ob ein oder mehrere Ereignisse für die konfigurierte CHO oder CPAC ausgelöst werden;
1 Bit oder eine Kennung, ID, einer CHO-Kandidatenzelle, wobei das 1 Bit anzeigt, dass die Zellenauswahl durchgeführt wird, nachdem ein Funkverbindungsausfall, RLF, oder ein CHO-Ausfall bei dem Endgerät aufgetreten ist und die CHO-Kandidatenzelle durch die Durchführung der Zellenauswahl ausgewählt wird, und die ID der CHO-Kandidatenzelle eine ID einer CHO-Kandidatenzelle ist, die durch die Durchführung der Zellenauswahl ausgewählt wird, nachdem der RLF- oder CHO-Ausfall bei dem Endgerät aufgetreten ist;
einer ereignisauslösenden Situation für die konfigurierte CPAC, wenn der RLF für das Endgerät in einer Hauptzellengruppe, MCG, auftritt, wobei eine Vielzahl von Ereignissen für die CPAC konfiguriert sind und die ereignisauslösende Situation für die konfigurierte CPAC eines von Folgendem umfasst:
dass die konfigurierte CPAC nicht ausgelöst wird;
dass nur ein Ereignis für die konfigurierte CPAC ausgelöst wird;
einem oder mehreren ausgelösten Ereignissen für die konfigurierte CPAC; oder
ob ein oder mehrere Ereignisse für die konfigurierte CPAC ausgelöst werden; und
mindestens einer laufenden Situation eines ersten Zeitgebers oder einer Anzahl von Sendewiederholungen der Funkverbindungssteuerung, RLC, wenn die CHO oder CPAC durchgeführt wird oder wenn die CHO oder CPAC erfolgreich ist.

6. Verfahren nach Anspruch 5, wobei die netzwerkseitige Vorrichtung eines von Folgendem umfasst:
einer Netzwerkverwaltungsfunktion, einer Entität zum Sammeln von Spuren, TCE, oder einer Basisstation.

7. Verfahren nach Anspruch 5, wobei das Melden der zugehörigen Informationen der CHO oder CPAC an die netzwerkseitige Vorrichtung Folgendes umfasst:
Senden einer RRC-Wiederherstellungsanforderungsnachricht oder eines RLF-Berichts in einem verbundenen Zustand oder in einem Prozess des Wechsels in den verbundenen Zustand, wobei die RRC-Wiederherstellungsanforderungsnachricht oder der RLF-Bericht die zugehörigen Informationen der CHO oder CPAC umfasst;
oder
Senden einer Nachricht A in einem Prozess der Durchführung der zweistufigen RA an die Zielzelle, wobei die Nachricht A die zugehörigen Informationen der CHO oder CPAC umfasst.

8. Verfahren nach Anspruch 5, wobei das Melden der zugehörigen Informationen der CHO oder CPAC an die netzwerkseitige Vorrichtung Folgendes umfasst:
Empfangen einer ersten Anfrage, die von der netzwerkseitigen Vorrichtung gesendet wird, und Melden der zugehörigen Informationen der CHO oder CPAC an die netzwerkseitige Vorrichtung nach der ersten Anfrage;
oder
einleitendes Melden der zugehörigen Informationen der CHO oder CPAC an die netzwerkseitige Vorrichtung;
oder
Senden einer Benachrichtigungsnachricht, wobei die Benachrichtigungsnachricht anzeigt, dass das Endgerät die zugehörigen Informationen der CHO oder CPAC aufweist, Empfangen einer zweiten Anfrage, die von der netzwerkseitigen Vorrichtung gesendet wird; und Melden der zugehörigen Informationen der CHO oder CPAC an die netzwerkseitige Vorrichtung nach der zweiten Anfrage.

9. Netzwerkseitige Vorrichtung (800), umfassend:
einen Prozessor (801);
einen Speicher (803); und
ein in dem Speicher gespeichertes und durch den Prozessor (801) ausführbares Programm, wobei die netzwerkseitige Vorrichtung (800) konfiguriert ist, um die Schritte des Verfahrens nach einem der Ansprüche 1 bis 4 durchzuführen, wenn das Programm durch den Prozessor (801) ausgeführt wird.

10. Endgerät (900), umfassend:
einen Prozessor (910);
einen Speicher (909); und
ein im Speicher (909) gespeichertes und durch den Prozessor (910) ausführbares Programm, wobei das Endgerät (900) konfiguriert ist, um die Schritte des Verfahrens nach einem der Ansprüche 5 bis 8 durchzuführen, wenn das Programm durch den Prozessor (910) ausgeführt wird.

## Revendications

1. Procédé de configuration, exécuté par un dispositif côté réseau, comprenant :
la configuration (301) d'un terminal pour qu'il rapporte des informations associées d'un transfert conditionnel, CHO, ou d'un ajout ou changement conditionnel de Pscell, CPAC,
**caractérisé en ce que** les informations associées du CHO ou du CPAC comprennent un ou plusieurs parmi :
une situation de déclenchement d'événement pour le CHO ou le CPAC configuré, dans lequel une pluralité d'événements sont configurés pour le CHO ou le CPAC, et la situation de déclenchement d'événement pour le CHO ou le CPAC configuré comprend l'un parmi :
le CHO ou le CPAC configuré n'étant pas déclenché ;
un seul événement étant déclenché pour le CHO ou le CPAC configuré ;
un ou plusieurs événements déclenchés pour le CHO ou le CPAC configuré ; ou
si un ou plusieurs événements pour le CHO ou le CPAC configuré sont déclenchés ;
1 bit, ou un identifiant, ID, d'une cellule CHO candidate, dans lequel le 1 bit indique qu'une sélection de cellule est réalisée après qu'une défaillance de liaison radio, RLF, ou une défaillance CHO se produise au niveau du terminal et la cellule CHO candidate est sélectionnée en réalisant la sélection de cellule, et l'ID de la cellule CHO candidate est un ID d'une cellule CHO candidate qui est sélectionnée en réalisant une sélection de cellule après qu'une RLF, ou une défaillance CHO se produise au niveau du terminal ;
une situation de déclenchement d'événement pour le CPAC configuré lorsque le RLF se produit au niveau du terminal dans un groupe de cellules maîtresses, MCG, dans lequel une pluralité d'événements sont configurés pour le CPAC, et la situation de déclenchement d'événement pour le CPAC configuré comprend l'un parmi :
le CPAC configuré n'étant pas déclenché ;
un seul événement étant déclenché pour le CPAC configuré ;
un ou plusieurs événements déclenchés pour le CPAC configuré ; ou
si un ou plusieurs événements pour le CPAC configuré sont déclenchés ; et
au moins une situation de fonctionnement d'un premier temporisateur ou un nombre de retransmissions de commande de liaison radio, RLC, lors de la réalisation du CHO ou du CPAC ou lorsque le CHO ou le CPAC est réussi.

2. Procédé selon la revendication 1, comprenant en outre :
la réception des informations associées du CHO ou du CPAC rapportées par le terminal ; et
la réalisation d'au moins une optimisation de configuration de CHO ou une optimisation de configuration de RA selon les informations associées du CHO ou du CPAC.

3. Procédé selon la revendication 1, dans lequel la réception des informations associées du CHO ou du CPAC rapportées par le terminal comprend :
la réception d'un message de demande de rétablissement RRC ou d'un rapport RLF envoyé par le terminal dans un état connecté ou dans un processus de changement à l'état connecté, le message de demande de rétablissement RRC ou le rapport RLF comprenant les informations associées du CHO ou du CPAC ;
ou,
la réception d'un message A envoyé par le terminal dans un processus de réalisation de RA en deux étapes vers la cellule cible, le message A comprenant les informations associées du CHO ou du CPAC.

4. Procédé selon la revendication 1, dans lequel la réception des informations associées du CHO ou du CPAC rapportées par le terminal comprend :
l'envoi d'une première demande au terminal ;
la réception des informations associées du CHO ou du CPAC rapportées par le terminal selon la première demande ;
ou,
la réception des informations associées du CHO ou du CPAC rapportées initialement par le terminal ;
ou,
la réception d'un message de notification envoyé par le terminal, le message de notification indiquant que le terminal a les informations associées du CHO ou du CPAC ;
l'envoi d'une seconde demande au terminal selon le message de notification ; et
la réception des informations associées du CHO ou du CPAC rapportées par le terminal selon la seconde demande.

5. Procédé de rapport d'informations, exécuté par un terminal, comprenant :
le rapport (401) des informations associées du CHO ou du CPAC au dispositif côté réseau,
**caractérisé en ce que** les informations associées du CHO ou du CPAC comprennent un ou plusieurs parmi :
une situation de déclenchement d'événement pour le CHO ou le CPAC configuré, dans lequel une pluralité d'événements sont configurés pour le CHO ou le CPAC, et la situation de déclenchement d'événement pour le CHO ou le CPAC configuré comprend l'un parmi :
le CHO ou le CPAC configuré n'étant pas déclenché ;
un seul événement étant déclenché pour le CHO ou le CPAC configuré ;
un ou plusieurs événements déclenchés pour le CHO ou le CPAC configuré ; ou
si un ou plusieurs événements pour le CHO ou le CPAC configuré sont déclenchés ;
1 bit, ou un identifiant, ID, d'une cellule CHO candidate, dans lequel le 1 bit indique qu'une sélection de cellule est réalisée après qu'une défaillance de liaison radio, RLF, ou une défaillance CHO se produise au niveau du terminal et la cellule CHO candidate est sélectionnée en réalisant la sélection de cellule, et l'ID de la cellule CHO candidate est un ID d'une cellule CHO candidate qui est sélectionnée en réalisant une sélection de cellule après qu'une RLF, ou une défaillance CHO se produise au niveau du terminal ;
une situation de déclenchement d'événement pour le CPAC configuré lorsque le RLF se produit au niveau du terminal dans un groupe de cellules maîtresses, MCG, dans lequel une pluralité d'événements sont configurés pour le CPAC, et la situation de déclenchement d'événement pour le CPAC configuré comprend l'un parmi :
le CPAC configuré n'étant pas déclenché ;
un seul événement étant déclenché pour le CPAC configuré ;
un ou plusieurs événements déclenchés pour le CPAC configuré ; ou
si un ou plusieurs événements pour le CPAC configuré sont déclenchés ; et
au moins une situation de fonctionnement d'un premier temporisateur ou un nombre de retransmissions de commande de liaison radio, RLC, lors de la réalisation du CHO ou du CPAC ou lorsque le CHO ou le CPAC est réussi.

6. Procédé selon la revendication 5, dans lequel le dispositif côté réseau comprend l'un parmi :
une fonction de gestion de réseau, une entité de collecte de traces, TCE, ou une station de base.

7. Procédé selon la revendication 5, dans lequel le rapport des informations associées du CHO ou du CPAC au dispositif côté réseau comprend :
l'envoi d'un message de demande de rétablissement RRC ou d'un rapport RLF dans un état connecté ou dans un processus de changement à l'état connecté, le message de demande de rétablissement RRC ou le rapport RLF comprenant les informations associées du CHO ou du CPAC ;
ou,
l'envoi d'un message A à la cellule cible dans un processus de réalisation RA en deux étapes, le message A comprenant les informations associées du CHO ou du CPAC.

8. Procédé selon la revendication 5, dans lequel le rapport des informations associées du CHO ou du CPAC au dispositif côté réseau comprend :
la réception d'une première demande envoyée par le dispositif côté réseau, et le rapport des informations associées du CHO ou du CPAC au dispositif côté réseau selon la première demande ;
ou,
le rapport de manière initiale des informations associées du CHO ou du CPAC au dispositif côté réseau ;
ou,
l'envoi d'un message de notification, le message de notification indiquant que le terminal a les informations associées du CHO ou du CPAC, la réception d'une seconde demande envoyée par le dispositif côté réseau ; et le rapport des informations associées du CHO ou du CPAC au dispositif côté réseau selon la seconde demande.

9. Dispositif côté réseau (800), comprenant :
un processeur (801) ;
une mémoire (803) ; et
un programme stocké dans la mémoire et exécutable par le processeur (801),
le dispositif côté réseau (800) étant configuré pour réaliser les étapes du procédé selon l'une quelconque des revendications 1 à 4 lorsque le programme est exécuté par le processeur (801).

10. Terminal (900), comprenant :
un processeur (910) ;
une mémoire (909) ; et
un programme stocké sur la mémoire (909) et exécutable par le processeur (910),
le terminal (900) étant configuré pour réaliser les étapes du procédé selon l'une quelconque des revendications 5 à 8 lorsque le programme est exécuté par le processeur (910).
